# EUROPEAN PATENT SPECIFICATION

(11) **EP 3 056 983 B1**
(45) Date of publication and mention of the grant of the patent: **05.12.2018**
(21) Application number: 14861033.0
(22) Date of filing: 31.10.2014
(51) Int. Cl.: G06F 3/14

(54) **DISPLAY FRAME GENERATION METHOD AND TERMINAL DEVICE**
ANZEIGERAHMENERZEUGUNGSVERFAHREN UND ENDGERÄTEVORRICHTUNG
PROCÉDÉ DE GÉNÉRATION D'IMAGE D'AFFICHAGE ET DISPOSITIF TERMINAL

(30) Priority: 06.11.2013 CN 201310547960
(43) Date of publication of application: 17.08.2016
(73) Proprietor: Huawei Device (Dongguan) Co., Ltd., Dongguan, Guangdong 523808 (CN)
(72) Inventor: CHEN, Lei, Shenzhen Guangdong 518129 (CN); HAN, Huayuan, Shenzhen Guangdong 518129 (CN)
(74) Representative: Thun, Clemens
(86) International application number: PCT/CN2014/090003
(87) International publication number: WO 2015/067143

(56) References cited:
- EP-A1- 2 629 182
- CN-A- 1 886 779
- CN-A- 103 593 155
- US-A- 5 933 155
- US-A1- 2012 262 463
- US-B1- 8 547 480

## Description

### TECHNICAL FIELD

The present invention relates to the field of communications technologies, and in particular, to a method for generating a display frame and a terminal device.

### BACKGROUND

In a display refreshing procedure of a terminal device such as a mobile phone on which an operating system such as an Android system is installed, a process of displaying any display frame is as follows: Each application such as a desktop or flow control executes a Render operation to render respective images separately; after all the applications complete the Render operations, the system executes a Compose operation to compose a display frame from the images rendered by the applications, for example, putting an image to the bottom and sticking an image; and output the display frame to a screen for final display. Therefore, duration of displaying a display frame mainly depends on: a maximum value among duration for the applications to execute the Render operations, duration for the system to execute the Compose, and duration of outputting the display frame to the screen.

For example, US 2012/0262463A1 refers to a virtualization method of vertical synchronization in graphics systems. Further, US 5,933,155 refers to a system and method for buffering multiple frames while controlling latency. Further, US 8,547,480 B1 refers to coordinating distributed graphics rendering in a multi window display.

A vertical synchronization (Vsync) refreshing mechanism is introduced to improve smoothness of the display frame. In the Vsync refreshing mechanism, a Vsync signal is sent to generate periodic interruption, so that any Render operation executed by each application or any Compose operation executed by the system is triggered and activated by the Vsync signal. In this way, the entire display refreshing procedure can be performed orderly.

However, when a mobile phone has a hardware configuration with low performance, the duration of the Render operations or the Compose operation may be greater than a Vsync signal cycle. As a result, frame skipping appears, thereby reducing timeliness of display refreshing of the system.

### SUMMARY

In view of this, a problem to be resolved in the present invention is how to optimize a display frame rate of a system for a terminal device to effectively improve timeliness of display refreshing.

In a first aspect a method for generating a display frame on a terminal device having system vertical synchronization signals is provided, the method comprising:
obtaining virtual vertical synchronization signals, the virtual vertical synchronization signals being obtained by delaying the system vertical synchronization signals by a predetermined delay, respectively;
triggering, by a first virtual vertical synchronization signal, a render operation, wherein each application currently running on the terminal device, in response to a user's touch side operation on a screen of the terminal device, renders an image;
triggering, by a completion of the rendering operation or by a second virtual vertical synchronization signal immediately following the first virtual vertical synchronization signal, a compose operation within an application framework layer of the terminal device to compose a display frame from the rendered images of the applications;
triggering, by a system vertical synchronization signal immediately following the second virtual vertical synchronization signal, the display on the screen of the terminal of the composed display frame.

In a second aspect a terminal device is provided comprising:
means for obtaining virtual vertical synchronization signals, the virtual vertical synchronization signals being obtained by delaying the system vertical synchronization signals by a predetermined delay, respectively;
a delayed rendering unit configured to perform a render operation, said render operation being triggered by a first virtual vertical synchronization signal, comprising rendering an image by each application currently running on the terminal device, in response to a user's touch slide operation on a screen of the terminal device, wherein
a delayed composing unit is configured to perform a compose operation within an application framework layer of the terminal device to compose a display frame from the rendered images of the applications, said compose operation being triggered by the completion of the render operation or by a second virtual vertical synchronization signal immediately following the first virtual synchronization signal;
a sending unit connected to the delayed composing unit configured to send the composed display frame to a screen of the terminal device to perform displaying, the sending being triggered by a system vertical synchronization signal immediately following the second virtual vertical synchronization signal.

According to the method for generating a display frame and the terminal device in embodiments of the present invention, a terminal device can control a Render execution manner of each application and a Compose execution manner of an application framework layer according to an execution result of a Render operation of each application currently running or a Compose operation of the application framework layer of the terminal device, so as to reduce frame skipping caused by an improper Render execution manner and an improper Compose execution manner, which effectively optimizes a display frame rate of a system of the terminal device, thereby effectively improving timeliness of display refreshing of the terminal device.

According to the following detailed descriptions of exemplary embodiments with reference to accompanying drawings, other features and aspects of the present invention become clearer.

### BRIEF DESCRIPTION OF DRAWINGS

Accompanying drawings that are included in the specification and that constitute a part of the specification illustrate, along with the specification, exemplary embodiments, features, and aspects of the present invention, and are used to explain principles of the present invention.
FIG. 1 shows a flowchart of a method for generating a display frame according to an example not forming part of the present invention;
FIG. 2 shows a schematic diagram of a display refreshing principle framework of an Android system in a method for generating a display frame according to an example not forming part of the present invention;
FIG. 3 shows a schematic diagram of a Vsync display refreshing mechanism of an Android system in a method for generating a display frame according to another example not forming part of the present invention;
FIG. 4 shows a schematic diagram of a case in which a processing result of a Render operation meets a predetermined condition in a method for generating a display frame according to another example not forming part of the present invention;
FIG. 5 shows a schematic diagram of a case in which a processing result of a Compose operation meets a predetermined condition in a method for generating a display frame according to another example not forming part of the present invention;
FIG. 6 shows a flowchart of a method for generating a display frame according to an embodiment of the present invention;
FIG. 7 shows a schematic diagram of a Vsync display refreshing mechanism that is of an Android system and obtained in manner 1 in a method for generating a display frame according to still another embodiment of the present invention;
FIG. 8 shows a schematic diagram of a Vsync display refreshing mechanism that is of an Android system and obtained in manner 2 in a method for generating a display frame according to still another embodiment of the present invention;
FIG. 9 shows a flowchart of a method for generating a display frame according to an example not forming part of the present invention;
FIG. 10 shows a flowchart of a method for generating a display frame according to still another example not forming part of the present invention;
FIG. 11 shows a structural block diagram of a terminal device according to an example not forming part of the present invention;
FIG. 12 shows a structural block diagram of a terminal device according to another example not forming part of the present invention;
FIG. 13 shows a structural block diagram of a terminal device according to an example not forming part of the present invention;
FIG. 14 shows a structural block diagram of a terminal device according to another example not forming part of the present invention;
FIG. 15 is a schematic structural diagram of a mobile terminal according to an example not forming part of the present invention; and
FIG. 16 is a schematic structural diagram of another mobile terminal according to an example not forming part of the present invention.

### DESCRIPTION OF EMBODIMENTS

Various exemplary embodiments, features, and aspects of the present invention are described in detail in the following with reference to accompanying drawings. In the accompanying drawings, identical reference numerals denote elements that have an identical or similar function.
Although various aspects of the embodiments are shown in the accompanying drawings, unless otherwise specified, the accompanying drawings are not necessarily drawn to scale.

The specific term "exemplary" herein means "used as an example, embodiment or illustrative". Any embodiment described as "exemplary" herein is not necessarily interpreted as being superior to or better than other embodiments.

In addition, to better describe the present invention, many specific details are provided in the following specific implementation manners. A person skilled in the art shall understand that the present invention may still be implemented even without some specific details. In other instances, well-known methods, means, elements, and circuits are not specifically described, so as to highlight the subject of the present invention.

### EXAMPLE 1

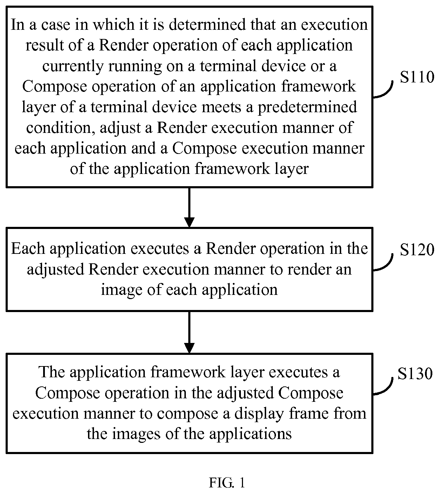

FIG. 1 shows a flowchart of a method for generating a display frame according to an example not forming part of the invention. As shown in FIG 1, the method for generating a display frame includes the following steps:
Step S110: In a case in which it is determined that an execution result of a Render operation of each application currently running on a terminal device or a Compose operation of an application framework layer of the terminal device meets a predetermined condition, adjust a Render execution manner of each application and a Compose execution manner of the application framework layer.
Step S120: Each application executes a Render operation in the adjusted Render execution manner to render an image of each application.
Step S130: The application framework layer executes a Compose operation in the adjusted Compose execution manner to compose a display frame from the images of the applications.

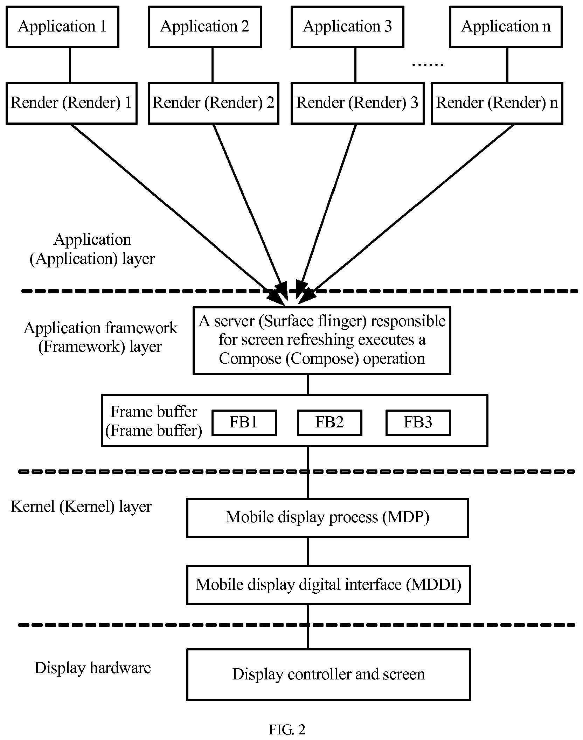

FIG. 2 shows a schematic diagram of a display refreshing principle framework of an Android system in a method for generating a display frame according to an example not forming part of the invention. As shown in FIG. 2, the Android system is used as an example. A process from rendering an image on a terminal device such as a mobile phone by a user by using each application program (application for short) to displaying the image on a screen such as an LCD screen may specifically include the following steps:
First, at an application layer, each application separately executes a Render operation according to its own application design status, and after Render operation processing is complete, each application sends a rendered image to a server (Surface flinger), responsible for screen refreshing, of an application framework layer.

Second, at the application framework layer, the system has three FBs (Frame Buffer), and the three FBs can be used cyclically. The Surface flinger finds an idle FB from the three FBs, and superimposes multiple images, which are rendered by the applications, by means of a Compose operation according to application configuration information, for example, which image should be put to the bottom, which image should be stuck, and which image uses a transparent effect, so as to obtain an image finally displayed on the LCD screen, that is, a display frame.

Finally, at a kernel layer, an MDP (Mobile Display Process) module may transmit the display frame through an MDDI (Mobile Display Digital Interface) to display hardware (including a display controller and a screen), such as LCD hardware (including an LCD controller and the LCD screen), and the display frame is the image finally displayed on the screen.

In the Android system, the system determines a configuration policy according to hardware configuration information of the terminal device and information about each application currently running on the terminal device, that is, determines a Render execution manner of each application and a Compose execution manner of the application framework layer. At the application layer, each application may execute the Render operation in the Render execution manner in the configuration policy to render an image of each application, and send the rendered image to the Surface flinger; at the application framework layer, the Surface flinger finds the idle FB, and executes the Compose operation in the Compose execution manner in the configuration policy to compose the display frame from the images of the applications; at the kernel layer, the MDP module transmits the display frame to the screen to perform displaying.

Specifically, the Render operation may be an operation of image rendering completed by each application on an instruction of the terminal device in response to an operation, for example, manually entering a text or a character, rendering an image, or dragging a menu, completed by the user by means of sliding on the screen. The Render execution manner may be a software manner, a hardware manner, or another manner; the Compose execution manner may also be a software manner, a hardware manner, or another manner. The software manner is generally implementing the Render operation by using an algorithm in a CPU (Central Processing Unit) of the terminal device. The hardware manner is generally implementing the Render operation by using a dedicated chip in a GPU (Graphic Processing Unit) or the MDP of the terminal device. If a hardware function of the terminal device is powerful and complex enough, more Render execution manners and Compose execution manners can further be provided.

According to the method for generating a display frame in this example, a terminal device can control a Render execution manner of each application and a Compose execution manner of an application framework layer according to an execution result of a Render operation of each application currently running or a Compose operation of the application framework layer of the terminal device, so as to reduce frame skipping caused by an improper Render execution manner and an improper Compose execution manner, which optimizes a display frame rate of a system of the terminal device, thereby improving timeliness of display refreshing of the terminal device.

### EXAMPLE 2

A main difference between a method in this exampleembodiment and the method shown in FIG. 1 lies in that an application running status and a system load status are determined with reference to factors such as duration of a Render operation and duration of a Compose operation. In step S110, determining that an execution result of a Render operation of each application currently running on a terminal device or a Compose operation of an application framework layer of the terminal device meets a predetermined condition may specifically include any one of the following cases:
Case 1: If duration for the applications to execute the Render operations exceeds a rendering time threshold, it is determined that the predetermined condition is met.
Case 2: If a quantity of consecutive times that duration for the applications to execute the Render operations exceeds a rendering time threshold exceeds a times threshold, it is determined that the predetermined condition is met.
Case 3: If duration for the application framework layer to execute the Compose operation exceeds a composing time threshold, it is determined that the predetermined condition is met.
Case 4: If a quantity of consecutive times that duration for the application framework layer to execute the Compose operation exceeds a composing time threshold exceeds the times threshold, it is determined that the predetermined condition is met.

Specifically, total duration used from rendering an image by each application to finally displaying the image on a screen of the terminal device (hand-following duration for short) depends on the duration of the Render operation (Render duration), the duration of the Compose operation (Compose duration), and display refreshing duration.

The Render duration is the duration of the Render operation, that is, duration of rendering an image by an application. The Render duration is affected by the following factors:
(1) A policy for rendering the image by the application: For example, the application may directly render a current image, or the image can be displayed only after some required information is acquired. For example, if a contact list needs to be displayed, current information about a contact list of a mobile phone needs to be acquired first from a database of the terminal device, and extra duration required for acquiring the information also needs to be calculated as a part of the Render duration.
(2) A size of the image rendered by the application: For example, the application needs to render a full-screen image or modify a small icon. Generally, a larger image that needs to be rendered indicates longer Render duration.
(3) A manner of rendering the image by the application: The application may execute the Render operation on the terminal device in a software manner (for example, using an algorithm in the CPU of the terminal device for implementation) or in a hardware manner (for example, using a dedicated chip in a GPU or an MDP of the terminal device for implementation). If the software manner is used for rendering, a CPU frequency and a current CPU load status have great impact on the Render duration; if the hardware manner is used for rendering, a GPU processing capability and a current GPU load status have great impact on the Render duration. In addition, one application may generally be freely installed on different mobile phones using different hardware configurations. CPU processing frequencies, GPU display processing capabilities, and the like of different mobile phones differ greatly. For a same application, an effect of rendering an image in the hardware manner may be better on some mobile phones with strong GPU processing capabilities, whereas an effect of rendering an image in the software manner may be better on some mobile phones with strong CPU capabilities and weak GPU capabilities.

The Compose duration is duration of superimposing multiple images by a Surface flinger at the application framework layer of a system. The Compose duration is affected by the following factors:
(1) A current processing capability and a current load status of system hardware. The system generally uses a GPU manner to execute the Compose operation by default. Therefore, the GPU processing capability and a current GPU load status have great impact on the Compose duration.
(2) A quantity of images on which the system performs the Compose operation. Generally, a larger quantity of images on which the system needs to perform the Compose operation indicates longer Compose duration.

The display refreshing duration is duration of transferring a frame of image in an FB to a screen such as an LCD screen by a mobile phone. The display refreshing duration is affected by the following factors:
(1) A size of a data amount of the frame of image to be displayed on the screen. A larger size of the data amount of the frame of image to be displayed on the screen indicates longer display refreshing duration.
(2) A bus transmission rate, that is, a bus transmission rate at which the MDP module transmits an image to the screen through an MDDI. A higher bus transmission rate indicates longer display refreshing duration.

For a specific terminal device such as a mobile phone, display refreshing duration of a same display frame is generally fixed and usually meets a requirement of a Vsync display refreshing mechanism of an Android system, unless a manufacturer of the mobile phone uses an extremely low hardware configuration to support an LCD screen of a very large size.

In summary, actual Render duration and actual Compose duration are quite unstable due to impact from many factors, which affects a display frame rate (frame rate for short) of the system.

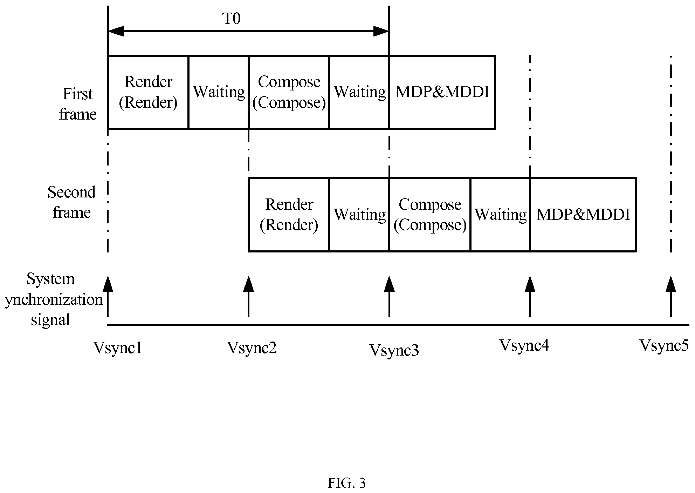

FIG. 3 shows a schematic diagram of a Vsync display refreshing mechanism of an Android system in a method for generating a display frame according to another example not forming part of the present invention. As shown in FIG. 3, a Vsync refreshing mechanism is introduced in a Google's Jelly Bean version of the Android system. Specifically, the Vsync refreshing mechanism is actually as follows: a "heartbeat", that is, a system Vsync signal is inserted in an entire display procedure, where the Vsync signal is sent by a display controller to a CPU for generating a Vsync interrupt, so as to control each Render operation and Compose operation to be completed according to the heartbeat. In this way, all key steps in the entire display process are integrated into a unified Vsync management mechanism. At present, there are commonly two frequencies of Vsync signals: 60 Hz and 75 Hz, which are applicable to terminal devices with different hardware configurations. If Render duration, Compose duration, and display refreshing duration of each frame can all be controlled to be within a Vsync signal cycle, it can be ensured that stability of a frame rate reaches an ideal value, thereby ensuring smoothness of the display frame. The Vsync signal cycle is a time interval at which the display controller sends a Vsync signal.

For example, as shown in FIG. 3, it is assumed that the Vsync signal cycle is T, and a signal transmission delay is not considered. After the first Vsync signal Vsync1 arrives at the CPU, the CPU forwards the first Vsync signal Vsync1 to each application, and each application begins to execute a Render operation in response to a user's touch slide operation on a screen; multiple images rendered by the applications are obtained after each application completes the Render operation; if the Render operations are completed within one Vsync signal cycle, remaining duration in a cycle of the Vsync signal Vsync1 is waiting duration. After the second Vsync signal Vsync2 arrives at the CPU, the CPU forwards the second Vsync signal Vsync2 to the system, the system begins to execute a Compose operation to perform composing on the multiple images rendered by the applications, and a display frame is generated after the system completes the Compose operation; if the Compose operation is completed within one Vsync signal cycle, remaining duration in a cycle of the Vsync signal Vsync2 is waiting duration. After the third Vsync signal Vsync3 arrives at the CPU, the system begins to execute display refreshing, and finally displays the display frame on the screen. It can be learned that duration of generating the display frame is *T*₀ = 2*T*.

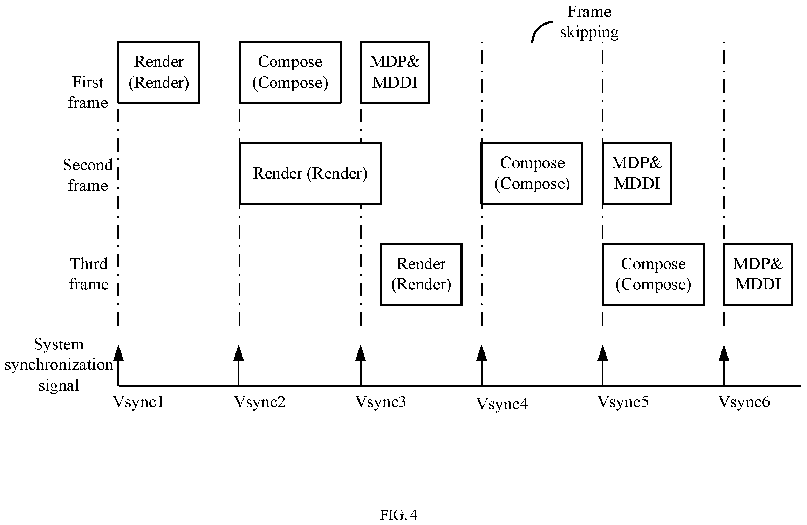

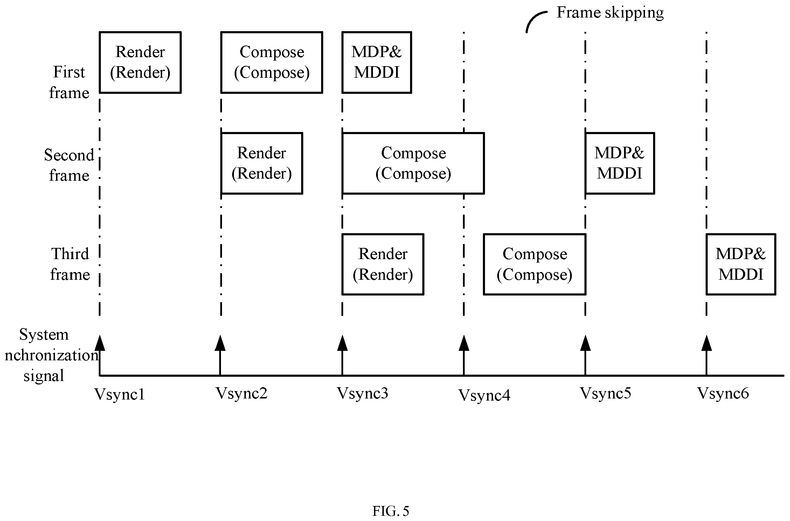

FIG. 4 and FIG. 5 show schematic diagrams of cases in which a processing result of a Render operation and/or a Compose operation meets a predetermined condition in a method for generating a display frame according to another example not forming part of the present invention. It is assumed that both a rendering time threshold and a composing time threshold are one Vsync signal cycle. As shown in FIG. 4, in the second frame, Render duration exceeds one Vsync signal cycle. As a result, frame skipping (a frame loss) appears because no display frame is displayed on a screen in a cycle of the fourth Vsync signal Vsync4. As shown in FIG. 5, in the second frame, Compose duration exceeds one Vsync signal cycle. As a result, frame skipping appears because no display frame is displayed on the screen in the cycle of the fourth Vsync signal Vsync4. A frame rate is reduced in both of the foregoing cases. Therefore, a frame loss can be avoided by controlling the Render duration and the Compose duration to be in one Vsync signal cycle, thereby ensuring the frame rate.

In a possible implementation manner, an application running status and a system load status are determined with reference to factors such as a set time range and a system frame rate, and in step S110, the determining that an execution result of a Render operation of each application currently running on a terminal device or a Compose operation of an application framework layer of the terminal device meets a predetermined condition may further include:
Case 5: If the system frame rate during the application executes the Render operation and the application framework layer executes the Compose operation is lower than a frame rate threshold within the set time range, it is determined that the predetermined condition is met.

Specifically, whether a current configuration policy is proper may be determined according to the frame rate. A proper frame rate needs to be obtained by performing statistics collection after a period of time, for example, after 100 to 200 frames are generated, and then the proper frame rate is compared with a set frame rate threshold. The frame rate threshold may be preset according to a hardware configuration of the terminal device. For example, if a Vsync signal frequency of the terminal device is 60 Hz, the frame rate threshold may be set to 60 frames per second. If an actual frame rate detected in this case is 59 frames per second, it is determined that a processing result of the Render operations of the applications and/or the Compose operation of the system meets the predetermined condition, that is, the current configuration policy is improper, and a Render execution manner of the applications and/or a Compose execution manner of the system need/needs to be adjusted.

Further, the rendering time threshold and the composing time threshold may be separately determined according to a recommended configuration in an empirical database or a historical configuration in a historical database. The rendering time threshold may be the same as or different from the composing time threshold.

Specifically, an empirical database may be established in the system of the terminal device. A recommended configuration may be obtained by testing various possible combinations of Compose execution manners of different terminal devices and Render execution manners of different applications according to hardware processing capabilities of various common terminal devices and various common applications, and the recommended configuration may be put into the empirical database. The recommended configuration may be a combination of the Render execution manner of each application on the terminal device and the Compose execution manner of the system. When a user starts an application, the recommended configuration may be used as a current configuration policy.

In addition, a historical database may further be established in the system of the terminal device. For example, on the terminal device, after each time the user starts the application and generates a display frame, if a detected frame rate is higher than the frame rate threshold, the system may automatically record a combination of a current Render execution manner of the application and a current Compose execution manner of the system as a historical configuration, and put the historical configuration into the historical database. When the user starts the application again, the historical configuration may be used as a current configuration policy. In this way, the current configuration policy does not need to be redetermined, thereby reducing system load.

Further, in an actual process of using the terminal device, an actual running status of each application and an actual load status of the system change dynamically; therefore, duration of the Render operations and duration of the Compose operation also change dynamically. In the empirical database, allowable fluctuation ranges of the Render duration of the applications and the Compose duration of the system may be obtained according to results of multiple tests on the Render duration of the applications and the Compose duration of the system on the terminal device.

For example, in the empirical database or the historical database, a rendering time threshold R*₀* and a composing time threshold C*₀* in the recommended configuration or the historical configuration of each application may be obtained, and a fluctuation range (*r₁, r₂*) of the Render duration and a fluctuation range (*c₁*, *c₂*) of the Compose duration in the recommended configuration may further be obtained by performing statistics collection according to the results of the multiple tests on the Render duration of the applications and the Compose duration of the system on the terminal device. According to this, the following may be obtained: a Render fluctuation coefficient is *α*₁ = (*r*₁+*r*₂)/2*r*₀, and a Compose fluctuation coefficient is *α*₂ = (*c*₁+*c*₂)/2*c*₀. Therefore, according to this, the following may be obtained: an updated rendering time threshold is *R* = *R*₀ * *α*₁, and an updated composing time threshold is *C* = *C*₀ ** α*₂.
According to the method for generating a display frame in this example, an application running status and a system load status are determined with reference to factors such as duration of a Render operation, duration of a Compose operation, a set time range, or a system frame rate. In this way, a Render execution manner of each application and a Compose execution manner of an application framework layer are adjusted, thereby effectively improving timeliness

### Embodiment

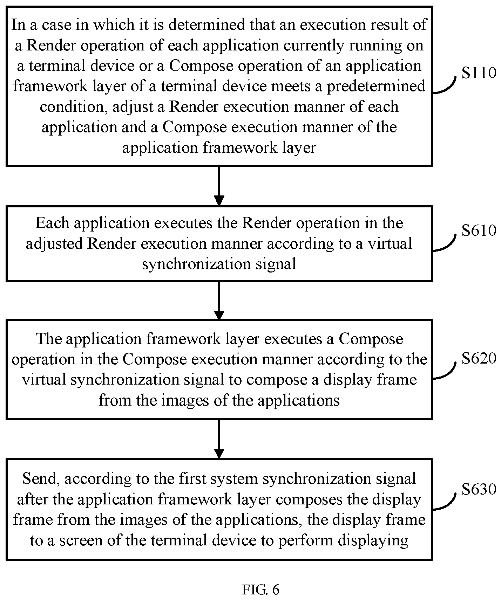

FIG. 6 shows a flowchart of a method for generating a display frame according to still another embodiment of the present invention. In FIG. 6, steps of which marks are the same as those in FIG. 1 have same functions. For brevity, detailed descriptions of these steps are omitted. As shown in FIG. 6, a main difference between the method shown in FIG. 6 and the method shown in FIG. 1 lies in that when both Render duration and Compose duration are less than one cycle of a system Vsync signal, a virtual Vsync signal is used to reduce hand-following duration, thereby further improving timeliness of display refreshing.

In detail, step S120 may further specifically include the following step:
Step S610: Each application executes the Render operation in the adjusted Render execution manner according to a virtual Vsync signal, where the virtual Vsync signal is a delayed signal obtained after a system Vsync signal experiences a set delay.

Accordingly, step S130 may further specifically include the following step:
Step S620: The application framework layer executes the Compose operation in the Compose execution manner according to the virtual Vsync signal to compose the display frame from the images of the applications.

After step S620, the following may further be included:
Step S630: Send, according to the first system Vsync signal after the application framework layer composes the display frame from the images of the applications, the display frame to a screen of the terminal device to perform displaying.

As shown in FIG. 3, for some terminal devices with hardware configurations having high processing capabilities, if the Render operations and the Compose operation are completed far before one Vsync signal cycle ends, remaining duration is wasted in a process of waiting for a Vsync signal to arrive. The remaining duration is also referred to as waiting duration. For example, according to a result of a test on a terminal device using a Qualcomm MSM8*30 platform, the Render duration is about 6 ms to 8 ms, and in this case, waiting duration after the Render operations are executed within the Vsync signal cycle is about 8 ms to 10 ms; and the Compose duration is about 10 ms to 12 ms, and in this case, waiting duration after the Compose operation is executed within the Vsync signal cycle is about 4 ms to 6 ms. A user feels that display refreshing of the terminal device is not timely due to existence of the waiting duration. Therefore, the virtual Vsync signal may be used to improve timeliness of the display refreshing of the terminal device, so that the Render operations are started only after the virtual Vsync signal arrives. The virtual Vsync signal is a delayed signal obtained after the system Vsync signal experiences a set delay *Δt₁.* A value of *Δt₁* may be preset according to hardware configurations of different terminal devices.

A specific manner of executing the Render operations and the Compose operation according to the virtual Vsync signal in step 610 and step 620 may include:
Manner 1: The virtual Vsync signal triggers the Render operations and the Compose operation.

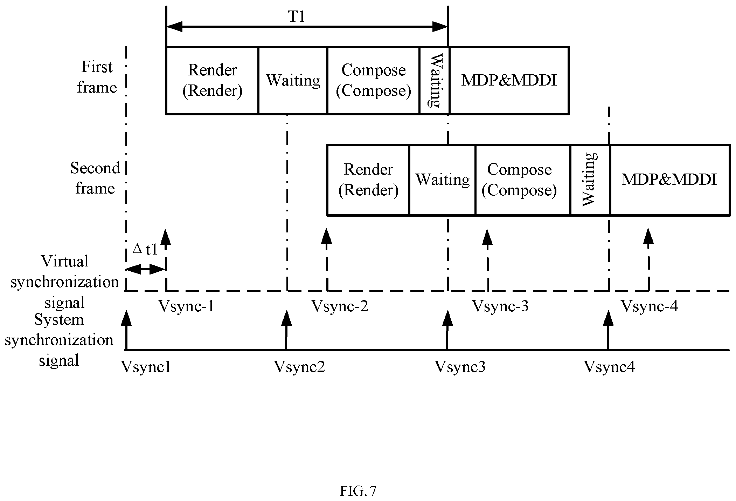

   FIG. 7 shows a schematic diagram of manner 1 in a method for generating a display frame according to still another embodiment of the present invention. As shown in FIG. 7, it is assumed that a Vsync signal cycle is T, and a signal transmission delay is not considered. After the first Vsync signal Vsync1 arrives at a CPU, a virtual Vsync signal Vsync-1 is obtained after the delay Δ*t*₁, the CPU forwards the virtual Vsync signal Vsync-1 to each application, and each application begins to execute a Render operation in response to a user's touch slide operation on a screen; multiple images rendered by the applications are obtained after each application completes the Render operation; if the Render operations are completed within one Vsync signal cycle, remaining duration in a Vsync-1 cycle is waiting duration. After the second Vsync signal Vsync2 arrives at the CPU, a virtual Vsync signal Vsync-2 is obtained after the delay Δ*t*₁, the CPU forwards the virtual Vsync signal Vsync-2 to a system, an application framework layer begins to execute a Compose operation to perform composing on the multiple images rendered by the applications, and a display frame is generated after the Compose operation is completed; if the Compose operation is completed within one Vsync signal cycle, remaining duration in the Vsync2 cycle is waiting duration. After the third Vsync signal Vsync3 arrives at the CPU, the system begins to execute display refreshing, and finally displays the display frame on the screen. It can be learned that duration of generating the display frame is *T*₁ = 2*T*- *Δt*₁, and compared with the duration *T*₀ of generating the display frame in FIG. 3, it can be learned that *T*₁ < *T*₀*.* Therefore, hand-following duration is reduced in manner 1, so that the Render operations can reflect a latest Render operation performed by the user by means of touch sliding on the screen, thereby improving the timeliness of the display refreshing.
Manner 2: The virtual Vsync signal triggers Render operations, and a mechanism that the virtual Vsync signal needs to be waited for to arrive between the Render operations and a Compose operation is cancelled, so that the Render operations and the Compose operation can be executed continuously, thereby completing a latest Render operation performed by a user by means of touch sliding on a screen.

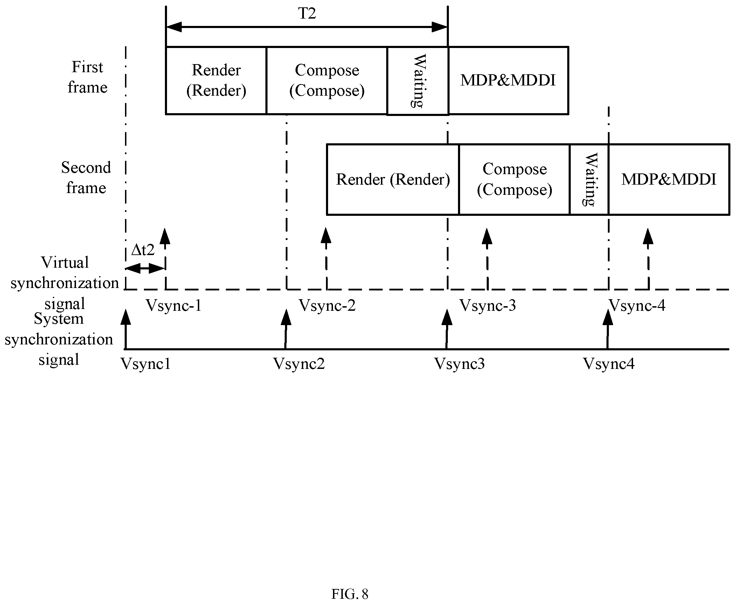

FIG. 8 shows a schematic diagram of manner 2 in a method for generating a display frame according to still another embodiment of the present invention. As shown in FIG. 8, it is assumed that a Vsync signal cycle is T, and a signal transmission delay is not considered. After the first Vsync signal Vsync1 arrives at a CPU, a virtual Vsync signal Vsync-1 is obtained after a delay *Δt₂,* the CPU forwards the Vsync-1 signal to each application, each application begins to execute a Render operation in response to a user's touch slide operation on a screen, and multiple images rendered by the applications are obtained after each application completes the Render operation; in this case, a system immediately begins to execute a Compose operation to perform composing on the multiple images rendered by the applications, and a display frame is generated
after the system completes the Compose operation; if the Compose operation is completed within one Vsync signal cycle, remaining duration in a Vsync2 cycle is waiting duration. After the third Vsync signal Vsync3 arrives at the CPU, the system begins to execute display refreshing, and finally displays the display frame on the screen. It can be learned that duration of generating the display frame is *T*₂ = 2*T*- Δ*t*₂. Compared with FIG. 3, it can be learned that *T*₂ < *T*₀*,* so that the Render operations can reflect a latest Render operation performed by a user by means of touch sliding on the screen, thereby improving the timeliness of the display refreshing.

In addition, in manner 2, because the Render operations and the Compose operation can be executed continuously, a value of the delay Δ*t*₂ in manner 2 can be greater than a value of Δ*t*₁ in manner 1, so that the Render operations can reflect a updated Render operation performed by the user by means of touch sliding on the screen, thereby further improving timeliness of the display refreshing.

According to the method for generating a display frame in this embodiment, a virtual Vsync signal obtained after a system Vsync signal is delayed is used to trigger each application to begin to execute a Render operation. In this way, hand-following duration can be effectively reduced in a case in which both Render duration and Compose duration are less than one cycle of the Vsync signal, thereby further improving timeliness of display refreshing of a terminal device.

### EXAMPLE 4

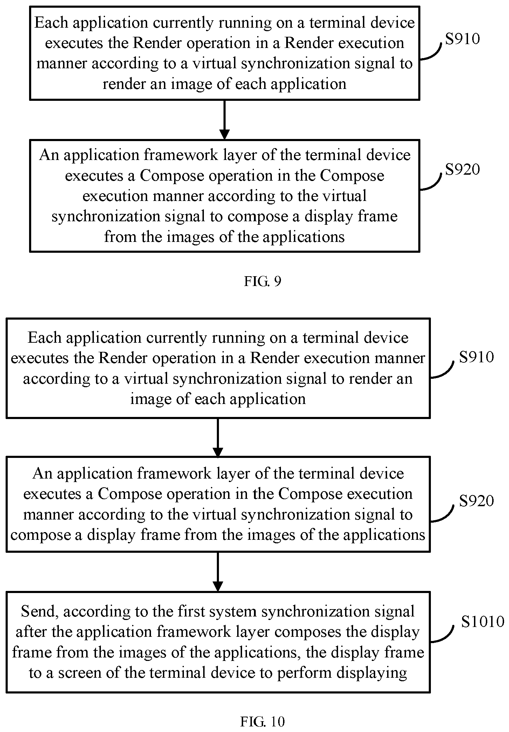

FIG. 9 shows a flowchart of a method for generating a display frame according to an example not forming part of the invention of the present invention.

As shown in FIG. 9, the method includes the following steps:
Step S910: Each application currently running on a terminal device executes the Render operation in a Render execution manner according to a virtual Vsync signal to render an image of each application, where the virtual Vsync signal is a delayed signal obtained after a system Vsync signal experiences a set delay.
Step S920: An application framework layer of the terminal device executes a Compose operation in the Compose execution manner according to the virtual Vsync signal to compose a display frame from the images of the applications.

In a possible implementation manner, after step S920, the following step may further be included:
Step S1010: Send, according to the first system Vsync signal after the application framework layer composes the display frame from the images of the applications, the display frame to a screen of the terminal device to perform displaying.

For a specific mechanism and a beneficial effect of the method for generating a display frame in this example not forming part of the invention, reference may be made to FIG. 6 to FIG. 8 and related descriptions thereof.

### EXAMPLE 5

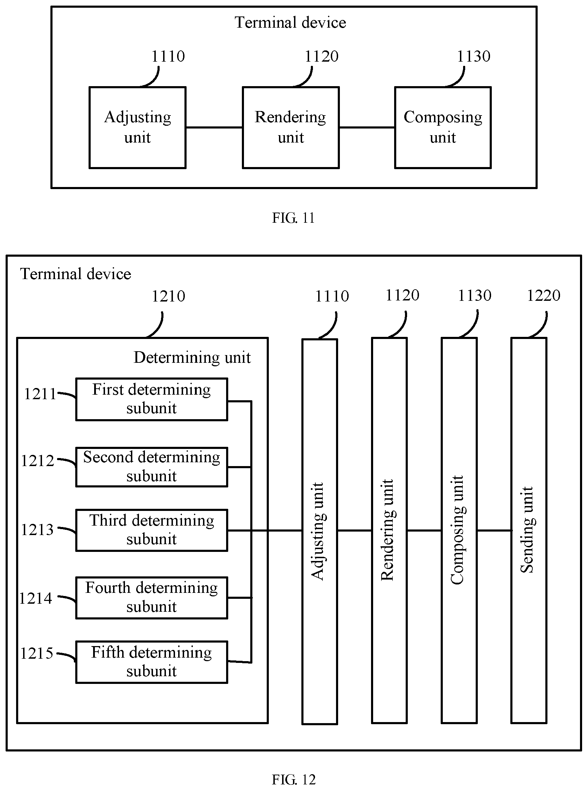

FIG. 11 shows a structural block diagram of a terminal device according to an example not forming part of the invention of the present invention.

As shown in FIG. 11, the terminal device mainly includes an adjusting unit 1110, a rendering unit 1120, and a composing unit 1130. The adjusting unit 1110 is configured to: in a case in which it is determined that an execution result of a Render operation of each application currently running on the terminal device or a Compose operation of an application framework layer of the terminal device meets a predetermined condition, adjust a Render execution manner of each application and a Compose execution manner of the application framework layer. The rendering unit 1120 is connected to the adjusting unit 1110 and is configured to instruct each application to execute a Render operation in the adjusted Render execution manner to render an image of each application. The composing unit 1130 is connected to the adjusting unit 1110 and is configured to instruct the application framework layer to execute a Compose operation in the adjusted Compose execution manner to compose a display frame from the images of the applications.

FIG. 12 shows a structural block diagram of a terminal device according to another example not forming part of the invention of the present invention.

As shown in FIG. 12, in a possible implementation manner, the terminal device further includes a determining unit 1210, connected to the adjusting unit 1110 and configured to determine that the execution result of the Render operation of each application currently running on the terminal device or the Compose operation of the application framework layer of the terminal device meets the predetermined condition. The determining unit 1210 includes any one or more of the following subunits:
a first determining subunit 1211, configured to determine, if duration for the applications to execute the Render operations exceeds a rendering time threshold, that the predetermined condition is met;
a second determining subunit 1212, configured to determine, if a quantity of consecutive times that duration for the applications to execute the Render operations exceeds a rendering time threshold exceeds a times threshold, that the predetermined condition is met;
a third determining subunit 1213, configured to determine, if duration for the application framework layer to execute the Compose operation exceeds a composing time threshold, that the predetermined condition is met; and
a fourth determining subunit 1214, configured to determine, if a quantity of consecutive times that duration for the application framework layer to execute the Compose operation exceeds a composing time threshold exceeds the times threshold, that the predetermined condition is met.

As shown in FIG. 12, in a possible implementation manner, the determining unit 1210 further includes a fifth determining subunit 1215, configured to determine, if a system frame rate during the application executes the Render operation and the application framework layer executes the Compose operation is lower than a frame rate threshold within a set time range, that the predetermined condition is met.

In a possible implementation manner, the rendering unit 1120 is further configured to instruct each application to execute the Render operation in the adjusted Render execution manner according to a virtual Vsync signal, where the virtual Vsync signal is a delayed signal obtained after a system Vsync signal experiences a set delay. The composing unit 1130 is further configured to instruct the application framework layer to execute the Compose operation in the Compose execution manner according to the virtual Vsync signal.

As shown in FIG. 12, in a possible implementation manner, the terminal device further includes a sending unit 1220, connected to the composing unit 1130 and configured to send, after the display frame is composed from the images of the applications and according to the first system Vsync signal after the application framework layer composes the display frame from the images of the applications, the display frame to a screen of the terminal device to perform displaying.

For a specific mechanism and a beneficial effect for generating a display frame by the terminal device, reference may be made to FIG. 1 to FIG. 8 and related descriptions thereof.

### EXAMPLE 6

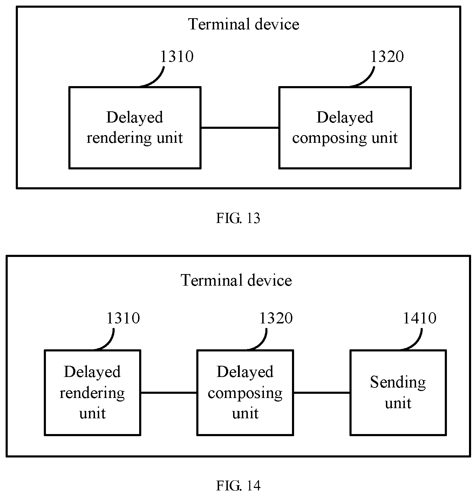

FIG 13 shows a structural block diagram of a terminal device according to an example not forming part of the invention of the present invention.

As shown in FIG. 13, the terminal device mainly includes a delayed rendering unit 1310 and a delayed composing unit 1320. The delayed rendering unit 1310 is configured to instruct each application currently running on the terminal device to execute the Render operation in a Render execution manner according to a virtual Vsync signal to render an image of each application, where the virtual Vsync signal is a delayed signal obtained after a system Vsync signal experiences a set delay. The delayed composing unit 1320 is configured to instruct an application framework layer of the terminal device to execute a Compose operation in the Compose execution manner according to the virtual Vsync signal to compose a display frame from the images of the applications.

FIG. 14 shows a structural block diagram of a terminal device according to another example not forming part of the invention of the present invention.

As shown in FIG. 14, in a possible implementation manner, the terminal device further includes a sending unit 1410, connected to the delayed composing unit 1320 and configured to send, after the display frame is composed from the images of the applications and according to the first system Vsync signal after the application framework layer composes the display frame from the images of the applications, the display frame to a screen of the terminal device to perform displaying.

For a specific mechanism and a beneficial effect for generating a display frame by the terminal device, reference may be made to FIG. 9 to FIG. 10 and related descriptions thereof.

### EXAMPLE 7

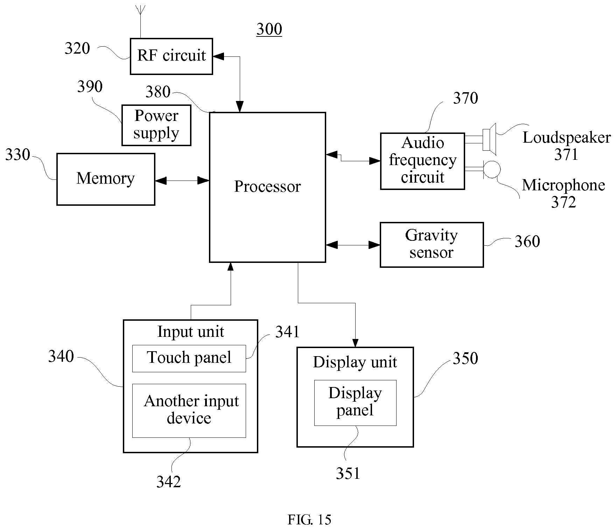

FIG. 15 is a schematic structural diagram of a mobile terminal according to an example not forming part of the invention of the present invention. The mobile terminal provided in this example not forming part of the invention of the present invention may be configured to implement the methods implemented in the example not forming part of the inventions of the present invention shown in FIG. 1 and FIG. 2. For ease of description, only a part related to the example not forming part of the inventions of the present invention is shown. For specific undisclosed technical details, reference may be made to the example not forming part of the inventions of the present invention shown in FIG. 1 to FIG. 8.

The mobile terminal may be a terminal device such as a mobile phone, a tablet computer, a notebook computer, a UMPC (Ultra-mobile Personal Computer, ultra-mobile personal computer), a netbook, or a PDA (Personal Digital Assistant, personal digital assistant). In this example not forming part of the invention of the present invention, an example in which the mobile terminal is a mobile phone is used for description. FIG. 15 shows a block diagram of a partial structure, related to the example not forming part of the inventions of the present invention, of a mobile phone 300.

As shown in FIG. 15, the mobile phone 300 includes parts such as an RF (radio frequency, radio frequency) circuit 320, a memory 330, an input unit 340, a display unit 350, a gravity sensor 360, an audio frequency circuit 370, a processor 380, and a power supply 390. A person skilled in the art may understand that the structure, shown in FIG. 15, of the mobile phone does not impose a limitation on the mobile phone, and the mobile phone may include more or less parts than those shown in the figure, or a combination of some parts, or different part arrangements.

The following describes the constituent parts of the mobile phone 300 in detail with reference to FIG. 15:
The RF circuit 320 may be configured to receive and transmit a signal during information reception and transmission or a call process, especially, transmit, after receiving downlink information of a base station, the downlink information to the processor 380 to perform processing; and transmit uplink data to the base station. Generally, the RF circuit includes but is not limited to an antenna, at least one amplifier, a transceiver, a coupler, an LNA (low noise amplifier, low noise amplifier), a duplexer, and the like. In addition, the RF circuit 320 may further communicate with a network and other devices by means of wireless communication. The wireless communication may use any communications standard or protocol, including but not limited to GSM (global system of mobile communication, Global System for Mobile Communications), GPRS (general packet radio service, general packet radio service), CDMA (code division multiple access, Code Division Multiple Access), WCDMA (wideband code division multiple access, Wideband Code Division Multiple Access), LTE (long term evolution, Long Term Evolution), an email, an SMS (short messaging service, short messaging service), and the like.

The memory 330 may be configured to store a software program and a module. The processor 380 executes various functional applications of the mobile phone 300 and processes data by running the software program and the module that are stored in the memory 330. The memory 330 may mainly include a program storage area and a data storage area, where the program storage area may store an operating system, an application program required by at least one function (such as a voice playing function and an image playing function), and the like; and the data storage area may store data (such as audio data, image data, and a phone book) created according to usage of the mobile phone 300, and the like. In addition, the memory 330 may include a high-speed random access memory and may further include a non-volatile memory, for example, at least one disk memory component, a flash memory component, or another non-volatile solid-state memory component.

The input unit 340 may be configured to receive entered digit or character information, and generate key signal input related to a user setting and function control of the mobile phone 300. Specifically, the input unit 340 may include a touchscreen 341 and another input device 342. The touchscreen 341 is also referred to as a touch panel, and may collect a touch operation performed by a user on or around the touchscreen 341 (for example, an operation performed by the user on the touchscreen 341 or around the touchscreen 341 by using any suitable object or accessory such as a finger or a stylus), and drive a corresponding connecting apparatus according to a preset pattern. Optionally, the touchscreen 341 may include two parts: a touch detection apparatus and a touch controller. The touch detection apparatus detects a touch direction of the user, detects a signal generated by the touch operation, and transmits the signal to the touch controller; the touch controller receives touch information from the touch detection apparatus, converts the touch information into coordinates of a contact, and then sends the coordinates of the contact to the processor 380, and can receive a command sent from the processor 380 and execute the command. In addition, the touchscreen 341 may be implemented in various manners such as resistive type, capacitive type, infrared type, and surface acoustic wave. In addition to the touchscreen 341, the input unit 340 may further include the another input device 342. Specifically, the another input device 342 may include but is not limited to one or more of the following: a physical keyboard, a functional button (such as a volume control button and a power switch button), a trackball, a mouse, a joystick, and the like.

The display unit 350 may be configured to display information entered by the user or information provided for the user and various menus of the mobile phone 300. The display unit 350 may include a display panel 351. Optionally, the display panel 341 may be configured in a form such as an LCD (Liquid Crystal Display, liquid crystal display) and an OLED (Organic Light-Emitting Diode, organic light-emitting diode). Further, the touchscreen 341 may cover the display panel 351. When detecting the touch operation on or around the touchscreen 341, the touchscreen 341 transfers the touch operation to the processor 380 to determine a type of a touch event, and then the processor 380 provides corresponding visual output on the display panel 351 according to the type of the touch event. In FIG. 15, the touchscreen 341 and the display panel 351 are used as two independent parts to implement input and output functions of the mobile phone 300; however, in some example not forming part of the inventions, the touchscreen 341 and the display panel 351 may be integrated to implement the input and output functions of the mobile phone 300.

The gravity sensor 360 may detect values of accelerations of the mobile phone in various directions (three axes generally), and detect a value and a direction of gravity when the mobile phone is in a still state, and may be configured to recognize an application of a mobile phone posture (for example, landscape-to-portrait switch, a related game, and magnetometer posture calibration), a function related to vibration recognition (such as a pedometer and a knock), and the like.

The mobile phone 300 may further include another sensor such as a light sensor. Specifically, the light sensor may include an ambient light sensor and a proximity sensor. The ambient light sensor may adjust luminance of the display panel 341 according to lightness of ambient light; the proximity sensor may detect whether an object approaches or touches the mobile phone, and may turn off the display panel 341 and/or backlight when the mobile phone 300 moves near an ear. Other sensors such as a gyroscope, a barometer, a hygrometer, a thermometer, and an infrared sensor may further be configured on the mobile phone 300, and details are not described herein again.

The audio frequency circuit 370, a loudspeaker 371, and a microphone 372 may provide an audio interface between the user and the mobile phone 300. The audio frequency circuit 370 may transmit an electrical signal converted from received audio data to the loudspeaker 371, and the loudspeaker 371 converts the electrical signal into a sound signal and outputs the sound signal; on another aspect, the microphone 372 converts a collected sound signal into an electrical signal, and the audio frequency circuit 370 receives the electrical signal and converts the electrical signal into audio data, and then outputs the audio data to the RF circuit 320 to send to, for example, another mobile phone, or outputs the audio data to the memory 330 to perform further processing.

The processor 380 is a control center of the mobile phone 300, is connected to each part of the entire mobile phone through various interfaces and lines, and executes various functions of the mobile phone 300 and processes data by running or executing the software program and/or the module stored in the memory 330 or invoking the data stored in the memory 330, thereby performing overall monitoring on the mobile phone. Optionally, the processor 380 may include one or more adjusting units. Preferably, the processor 380 may integrate an application processor and a modem processor, where the application processor mainly processes an operating system, a user interface, an application program, and the like, and the modem processor mainly processes wireless communication. It may be understood that the modem processor may also not be integrated in the processor 380.

The mobile phone 300 further includes the power supply 390 (such as a battery) supplying power to each part. Preferably, the power supply may be logically connected to the processor 380 by using a power management system, so that the power management system implements functions such as charging management, discharging management, and power consumption management.

Although not shown in the figure, the mobile phone 300 may further include a WiFi (wireless fidelity) module, a Bluetooth module, and the like, and details are not described herein again.

In this example not forming part of the invention of the present invention, the memory 330 is further configured to store program code including a computer operation instruction. The program may be specifically used for: adjusting a Render execution manner of each application and a Compose execution manner of the application framework layer in a case in which it is determined that an execution result of a Render operation of each application currently running on the terminal device or a Compose operation of an application framework layer of the terminal device meets a predetermined condition; instructing each application to execute a Render operation in the adjusted Render execution manner to render an image of each application; and instructing the application framework layer to execute a Compose operation in the adjusted Compose execution manner to compose a display frame from the images of the applications.

In a first possible implementation manner, the program may further be used for: if duration for the applications to execute the Render operations exceeds a rendering time threshold, determining that the predetermined condition is met; or if a quantity of consecutive times that duration for the applications to execute the Render operations exceeds a rendering time threshold exceeds a times threshold, determining that the predetermined condition is met; or if duration for the application framework layer to execute the Compose operation exceeds a composing time threshold, determining that the predetermined condition is met; or if a quantity of consecutive times that duration for the application framework layer to execute the Compose operation exceeds a composing time threshold exceeds the times threshold, determining that the predetermined condition is met.

In a second possible implementation manner, the program may further be used for: if a system frame rate during the application executes the Render operation and the application framework layer executes the Compose operation is lower than a frame rate threshold within a set time range, determining that the predetermined condition is met.

In a third possible implementation manner, the program may further be used for: instructing each application to execute the Render operation in the adjusted Render execution manner according to a virtual Vsync signal, where the virtual Vsync signal is a delayed signal obtained after a system Vsync signal experiences a set delay; and instructing the application framework layer to execute the Compose operation in the Compose execution manner according to the virtual Vsync signal to render the display frame from the images of the applications.

In a fourth possible implementation manner, the program may further be used for: sending, after the display frame is composed from the images of the applications and according to the first system Vsync signal after the application framework layer composes the display frame from the images of the applications, the display frame to a screen of the terminal device to perform displaying.

For a specific mechanism and a beneficial effect for generating a display frame by the terminal device, reference may be made to FIG. 1 to FIG. 8 and related descriptions thereof.

### EXAMPLE 8

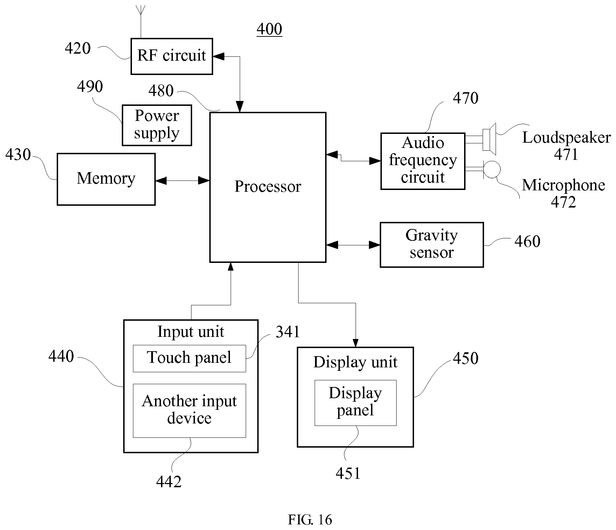

FIG. 16 is a schematic structural diagram of a mobile terminal according to an example not forming part of the invention of the present invention. The mobile terminal provided in this example not forming part of the invention of the present invention may be configured to implement the methods implemented in the example not forming part of the inventions of the present invention shown in FIG 1 and FIG 2. For ease of description, only a part related to the example not forming part of the inventions of the present invention is shown. For specific undisclosed technical details, reference may be made to the example not forming part of the inventions of the present invention shown in FIG. 9 and FIG. 10.

The mobile terminal may be a terminal device such as a mobile phone, a tablet computer, a notebook computer, a UMPC (Ultra-mobile Personal Computer), a netbook, or a PDA (Personal Digital Assistant). In this example not forming part of the invention of the present invention, an example in which the mobile terminal is a mobile phone is used for description. FIG. 16 shows a block diagram of a partial structure, related to the example not forming part of the inventions of the present invention, of a mobile phone 400.

As shown in FIG. 16, the mobile phone 400 includes parts such as an RF (radio frequency, radio frequency) circuit 420, a memory 430, an input unit 440, a display unit 450, a gravity sensor 460, an audio frequency circuit 470, a processor 480, and a power supply 490. A person skilled in the art may understand that the structure, shown in FIG. 16, of the mobile phone does not impose a limitation on the mobile phone, and the mobile phone may include more or less parts than those shown in the figure, or a combination of some parts, or different part arrangements.

The following describes the constituent parts of the mobile phone 400 in detail with reference to FIG. 16:
The RF circuit 420 may be configured to receive and transmit a signal during information reception and transmission or a call process, especially, transmit, after receiving downlink information of a base station, the downlink information to the processor 480 to perform processing; and transmit uplink data to the base station. Generally, the RF circuit includes but is not limited to an antenna, at least one amplifier, a transceiver, a coupler, an LNA (low noise amplifier, low noise amplifier), a duplexer, and the like. In addition, the RF circuit 420 may further communicate with a network and other devices by means of wireless communication. The wireless communication may use any communications standard or protocol, including but not limited to GSM (Global System for Mobile Communications), GPRS (general packet radio service), CDMA (Code Division Multiple Access), WCDMA (Wideband Code Division Multiple Access), LTE (Long Term Evolution), an email, an SMS (short messaging service), and the like.

The memory 430 may be configured to store a software program and a module. The processor 480 executes various functional applications of the mobile phone 400 and processes data by running the software program and the module that are stored in the memory 430. The memory 430 may mainly include a program storage area and a data storage area, where the program storage area may store an operating system, an application program required by at least one function (such as a voice playing function and an image playing function), and the like; and the data storage area may store data (such as audio data, image data, and a phone book) created according to usage of the mobile phone 400, and the like. In addition, the memory 430 may include a high-speed random access memory and may further include a non-volatile memory, for example, at least one disk storage component, a flash memory component, or another non-volatile solid-state memory component.

The input unit 440 may be configured to receive entered digit or character information, and generate key signal input related to a user setting and function control of the mobile phone 400. Specifically, the input unit 440 may include a touchscreen 441 and another input device 442. The touchscreen 441 is also referred to as a touch panel, and may collect a touch operation performed by a user on or around the touchscreen 441 (for example, an operation performed by the user on the touchscreen 441 or around the touchscreen 441 by using any suitable object or accessory such as a finger or a stylus), and drive a corresponding connecting apparatus according to a preset pattern. Optionally, the touchscreen 441 may include two parts: a touch detection apparatus and a touch controller. The touch detection apparatus detects a touch direction of the user, detects a signal generated by the touch operation, and transmits the signal to the touch controller; the touch controller receives touch information from the touch detection apparatus, converts the touch information into coordinates of a contact, and then sends the coordinates of the contact to the processor 480, and can receive a command from the processor 480 and execute the command. In addition, the touchscreen 441 may be implemented in various manners such as resistive type, capacitive type, infrared type, and surface acoustic wave. In addition to the touchscreen 441, the input unit 440 may further include the another input device 442. Specifically, the another input device 442 may include but is not limited to one or more of the following: a physical keyboard, a functional button (such as a volume control button and a power switch button), a trackball, a mouse, a joystick, and the like.

The display unit 450 may be configured to display information entered by the user or information provided for the user and various menus of the mobile phone 400. The display unit 450 may include a display panel 451. Optionally, the display panel 441 may be configured in a form such as an LCD (Liquid Crystal Display) and an OLED (Organic Light-Emitting Diode). Further, the touchscreen 441 may cover the display panel 451. When detecting the touch operation on or around the touchscreen 441, the touchscreen 341 transfers the touch operation to the processor 480 to determine a type of a touch event, and then the processor 480 provides corresponding visual output on the display panel 451 according to the type of the touch event. In FIG. 16, the touchscreen 441 and the display panel 451 are used as two independent parts to implement input and output functions of the mobile phone 400; however, in some example not forming part of the inventions, the touchscreen 441 and the display panel 351 may be integrated to implement the input and output functions of the mobile phone 300.

The gravity sensor 460 may detect values of accelerations of the mobile phone in various directions (three axes generally), and detect a value and a direction of gravity when the mobile phone is in a still state, and may be configured to recognize an application of a mobile phone posture (for example, landscape-to-portrait switch, a related game, and magnetometer posture calibration), a function related to vibration recognition (such as a pedometer and a knock), and the like.

The mobile phone 400 may further include another sensor such as a light sensor. Specifically, the light sensor may include an ambient light sensor and a proximity sensor. The ambient light sensor may adjust luminance of the display panel 441 according to lightness of ambient light; the proximity sensor may detect whether an object approaches or touches the mobile phone, and may shut off the display panel 441 and/or backlight when the mobile phone 400 moves near an ear. Other sensors such as a gyroscope, a barometer, a hygrometer, a thermometer, and an infrared sensor may further be configured on the mobile phone 400, and details are not described herein again.

The audio frequency circuit 470, a loudspeaker 471, and a microphone 472 may provide an audio interface between the user and the mobile phone 400. The audio frequency circuit 470 may transmit an electrical signal converted from received audio data to the loudspeaker 471, and the loudspeaker 471 converts the electrical signal into a sound signal and outputs the sound signal; on another aspect, the microphone 472 converts a collected sound signal into an electrical signal, and the audio frequency circuit 470 receives the electrical signal and converts the electrical signal into audio data, and then outputs the audio data to the RF circuit 420 to send to, for example, another mobile phone, or outputs the audio data to the memory 430 to perform further processing.

The processor 480 is a control center of the mobile phone 400, is connected to each part of the entire mobile phone through various interfaces and lines, and executes various functions of the mobile phone 400 and processes data by running or executing the software program and/or the module stored in the memory 430 or invoking the data stored in the memory 430, thereby performing overall monitoring on the mobile phone. Optionally, the processor 480 may include one or more adjusting units. Preferably, the processor 480 may integrate an application processor and a modem processor, where the application processor mainly processes an operating system, a user interface, an application program, and the like, and the modem processor mainly processes wireless communication. It may be understood that the modem processor may also not be integrated in the processor 480.

The mobile phone 400 further includes the power supply 490 (such as a battery) supplying power to each part. Preferably, the power supply may be logically connected to the processor 480 by using a power management system, so that the power management system implements functions such as charging management, discharging management, and power consumption management.

Although not shown in the figure, the mobile phone 400 may further include a WiFi (wireless fidelity) module, a Bluetooth module, and the like, and details are not described herein again.

In this example not forming part of the invention of the present invention, the memory 430 is further configured to store program code including a computer operation instruction. The program may be specifically used for: instructing each application currently running on the terminal device to execute the Render operation in a Render execution manner according to a virtual Vsync signal to render an image of each application, where the virtual Vsync signal is a delayed signal obtained after a system Vsync signal experiences a set delay; and instructing an application framework layer of the terminal device to execute a Compose operation in the Compose execution manner according to the virtual Vsync signal to compose a display frame from the images of the applications.

In a first possible implementation manner, the program may further be used for: sending, after the display frame is composed from the images of the applications and according to the first system Vsync signal after the application framework layer composes the display frame from the images of the applications, the display frame to a screen of the terminal device to perform displaying.

In conclusion, the foregoing descriptions are merely exemplary example not forming part of the inventions of the present invention, but are not intended to limit the protection scope of the present invention. Any modification, equivalent replacement, and improvement made without departing from the principle of the present invention shall fall within the protection scope of the present invention.

## Claims

1. A method for generating a display frame on a terminal device having system vertical synchronization signals, the method comprising:
obtaining virtual vertical synchronization signals, the virtual vertical synchronization signals being obtained by delaying the system vertical synchronization signals by a predetermined delay, respectively;
triggering, by a first virtual vertical synchronization signal, a render operation, wherein each application currently running on the terminal device renders an image based on a user's touch slide operation on a screen of the terminal device;
triggering, by a completion of the rendering operation or by a second virtual vertical synchronization signal immediately following the first virtual vertical synchronization signal, a compose operation within an application framework layer of the terminal device to compose a display frame from the rendered images of the applications;
triggering, by a system vertical synchronization signal immediately following the second virtual vertical synchronization signal, the display on the screen of the terminal of the composed display frame.

2. A terminal device, comprising:
means for obtaining virtual vertical synchronization signals, the virtual vertical synchronization signals being obtained by delaying system vertical synchronization signals by a predetermined delay, respectively;
a delayed rendering unit (1310), configured to perform a render operation, said render operation being triggered by a first virtual vertical synchronization signal, comprising rendering an image by each application currently running on the terminal device based on a user's touch slide operation on a screen of the terminal device, wherein
a delayed composing unit (1320) is configured to perform a compose operation within an application framework layer of the terminal device to compose a display frame from the rendered images of the applications, said compose operation being triggered by the completion of the render operation or by a second virtual vertical synchronization signal immediately following the first virtual synchronization signal;
a sending unit (1410), connected to the delayed composing unit (1320), configured to send the composed display frame to a screen of the terminal device to perform displaying, the sending being triggered by a system vertical synchronization signal immediately following the second virtual vertical synchronization signal.

## Patentansprüche

1. Verfahren zum Erzeugen eines Anzeigerahmens auf einer Endgerätevorrichtung mit vertikalen Systemsynchronisationssignalen, das Verfahren Folgendes umfassend:
Erlangen virtueller vertikaler Synchronisationssignale, wobei die virtuellen vertikalen Synchronisationssignale durch Verzögern der vertikalen Systemsynchronisationssignale um jeweils eine vorbestimmte Verzögerung erlangt werden;
Auslösen durch ein erstes virtuelles vertikales Synchronisationssignal einer Wiedergabeoperation, wobei jede Anwendung, die gegenwärtig auf der Endgerätevorrichtung läuft, ein Bild auf der Grundlage einer Touch-Slide-Operation eines Benutzers auf einem Bildschirm der Endgerätevorrichtung wiedergibt;
Auslösen durch einen Abschluss der Wiedergabeoperation oder durch ein zweites virtuelles vertikales Synchronisationssignal, das dem ersten virtuellen vertikalen Synchronisationssignal unmittelbar nachfolgt, einer zusammengesetzten Operation innerhalb einer Anwendungs-Rahmenstrukturschicht der Endgerätevorrichtung, um aus den wiedergegebenen Bildern der Anwendungen einen Anzeigerahmen zusammenzusetzen;
Auslösen durch ein vertikales Systemsynchronisationssignal, das dem zweiten virtuellen vertikalen Synchronisationssignal unmittelbar nachfolgt, der Anzeige des zusammengesetzten Anzeigerahmens auf dem Bildschirm des Endgeräts.

2. Endgerätevorrichtung, Folgendes umfassend:
Mittel zum Erlangen virtueller vertikaler Synchronisationssignale, wobei die virtuellen vertikalen Synchronisationssignale durch Verzögern vertikaler Systemsynchronisationssignale um jeweils eine vorbestimmte Verzögerung erlangt werden;
eine verzögerte Wiedergabeeinheit (1310), die konfiguriert ist, eine Wiedergabeoperation durchzuführen, wobei die Wiedergabeoperation durch ein erstes virtuelles vertikales Synchronisationssignal ausgelöst wird, das Wiedergeben eines Bilds durch jede Anwendung, die gegenwärtig auf der Endgerätevorrichtung läuft, auf der Grundlage einer Touch-Slide-Operation eines Benutzers auf einem Bildschirm der Endgerätevorrichtung umfasst, wobei
eine verzögerte Zusammensetzeinheit (1320) konfiguriert ist, eine Zusammensetzoperation innerhalb einer Anwendungs-Rahmenstrukturschicht der Endgerätevorrichtung durchzuführen, um einen Anzeigerahmen aus den wiedergegebenen Bildern der Anwendungen zusammenzusetzen, wobei die Zusammensetzoperation durch den Abschluss der Wiedergabeoperation oder durch ein zweites virtuelles vertikales Synchronisationssignal ausgelöst wird, das dem ersten virtuellen Synchronisationssignal unmittelbar nachfolgt;
eine Sendeeinheit (1410), die mit der verzögerten Zusammensetzeinheit (1320) verbunden ist und konfiguriert ist, den zusammengesetzten Anzeigerahmen an einen Bildschirm der Endgerätevorrichtung zu senden, um ein Anzeigen durchzuführen, wobei das Senden durch ein vertikales Systemsynchronisationssignal ausgelöst wird, das dem zweiten virtuellen vertikalen Synchronisationssignal unmittelbar nachfolgt.

## Revendications

1. Procédé de génération d'une vue sur un dispositif terminal comportant des signaux de synchronisation verticale système, le procédé comprenant les étapes suivantes :
obtention de signaux de synchronisation verticale virtuels, les signaux de synchronisation verticale virtuels étant obtenus respectivement par retard des signaux de synchronisation verticale système d'un retard prédéterminé ;
déclenchement, par un premier signal de synchronisation verticale virtuel, d'une opération de rendu, chaque application en cours d'exécution sur le dispositif terminal effectuant un rendu d'une image en fonction d'une opération de glissement tactile d'un utilisateur sur un écran du dispositif terminal ;
déclenchement, à l'issue de l'opération de rendu ou par un deuxième signal de synchronisation verticale virtuel qui suit immédiatement le premier signal de synchronisation verticale virtuel, d'une opération de composition au sein d'une couche cadre d'applications du dispositif terminal visant à composer une vue à partir des images rendues des applications ;
déclenchement, par un signal de synchronisation verticale système qui suit immédiatement le deuxième signal de synchronisation verticale virtuel, de l'affichage sur l'écran du terminal de la vue composée.

2. Dispositif terminal, comprenant :
des moyens d'obtention de signaux de synchronisation verticale virtuels, les signaux de synchronisation verticale virtuels étant obtenus respectivement par retard de signaux de synchronisation verticale système d'un retard prédéterminé ;
une unité de rendu retardé (1310), configurée pour réaliser une opération de rendu, ladite opération de rendu étant déclenchée par un premier signal de synchronisation verticale virtuel, comprenant le rendu d'une image par chaque application en cours d'exécution sur le dispositif terminal en fonction d'une opération de glissement tactile d'un utilisateur sur un écran du dispositif terminal,
une unité de composition retardée (1320) étant configurée pour réaliser une opération de composition au sein d'une couche cadre d'applications du dispositif terminal visant à composer une vue à partir des images rendues des applications, ladite opération de composition étant déclenchée à l'issue de l'opération de rendu ou par un deuxième signal de synchronisation verticale virtuel qui suit immédiatement le premier signal de synchronisation virtuel ;
une unité d'envoi (1410), reliée à l'unité de composition retardée (1320), configurée pour envoyer la vue composée à un écran du dispositif terminal pour réaliser son affichage, l'envoi étant déclenché par un signal de synchronisation verticale système qui suit immédiatement le deuxième signal de synchronisation verticale virtuel.
